# EUROPÄISCHE PATENTSCHRIFT

(11) **EP 4 010 616 B1**
(45) Veröffentlichungstag und Bekanntmachung des Hinweises auf die Patenterteilung: **19.06.2024**
(21) Anmeldenummer: 20753702.8
(22) Anmeldetag: 03.08.2020
(51) Int. Cl.: F16L 23/08

(54) **SCHELLE**
CLAMP
COLLIER DE SERRAGE

(30) Priorität: 05.08.2019 DE 102019121098
(43) Veröffentlichungstag der Anmeldung: 15.06.2022
(73) Patentinhaber: NORMA Germany GmbH, 63477 Maintal (DE)
(72) Erfinder: JAROSZ, Mateusz, Newbury Berkshire RG19 6HW (GB)
(74) Vertreter: Patentanwälte Olbricht Buchhold Keulertz
(86) Internationale Anmeldenummer: PCT/EP2020/071796
(87) Internationale Veröffentlichungsnummer: WO 2021/023705

(56) Entgegenhaltungen:
- CN-A- 109 823 691
- KR-B1- 100 919 509
- US-A- 5 604 681

## Beschreibung

Die Erfindung betrifft gemäß dem Oberbegriff von Anspruch 1 eine Schelle zum Befestigen von Schlauch- oder Rohrelementen, mit einem ringförmigen Schellenband mit wenigstens einer Öffnung, wobei die Schelle einen geschlossenen Zustand und einen geöffneten Zustand aufweist sowie in einer Montagestellung festgeklemmt wird.

Derartige Schellen sind in verschiedenen Ausführungsformen weit verbreitet. Sie werden unter anderem im Automobilbau dazu genutzt, Rohre und Schläuche auch unter Belastung in bestimmten Positionen zu halten und auch Rohrelemente an Stoßstellen fluiddicht miteinander zu verbinden. Hierbei ist es wichtig, dass das Spannen des Spannelementes in der vorgeschriebenen Art und Weise erfolgt, da sowohl ein zu festes Spannen als auch ein Spannen mit zu geringer Spannkraft die Funktionalität wesentlich beeinträchtigen kann.

Aus dem Stand der Technik ist es bekannt, Montageroboter derart zu programmieren, dass die Spannelemente, bei denen es sich oft um Spannschrauben handelt, bei der Montage auf die richtigen Spannkräfte eingestellt werden. Hierzu ist es erforderlich, die jeweiligen Daten der anzuziehenden Schelle zu kennen und ggf. auch einen Startpunkt für die Montage zu definieren. Auch bei einem manuellen Anziehen ist eine Kenntnis der Spannwerte und deren Einhaltung unumgänglich.

Aus KR 100 919 509 B1 ist ein Kabelbinder mit einem Rasterband bekannt, an dessen einen Ende ein Fixierkopf sitzt, durch den das andere Ende zum Schließen des Kabelbinders zu fädeln ist. Am Rasterband sind nahe dem Fixierkopf zwei gegenüberliegende seitliche Flügel angeordnet. Auf einem der Flügel sitzt ein RFID-Chip, dessen Antenne sich auf beide der Flügel erstreckt. Auf den RFID-Chip können von einem Monteur mit Hilfe eines Sendegerätes Daten abgespeichert werden, die man später wieder auslesen kann.

In US 5,604,681 A ist eine Leitungskupplung mit einem Funksignaletikett angegeben.

Ferner wird in CN 109 823 691 ein Bindeband mit einem RFID-Chip beschrieben. Die Erfindung bzw. das Bindeband umfasst ein Bindeband, einen Verriegelungskopf, eine Tag-Platine und einen elektronischen RFID-Tag, wobei das Bindeband mit einer Vielzahl von äquidistant angeordneten Klemmzähnen versehen ist;

Die Aufgabe der Erfindung besteht darin, eine verbesserte Schelle der eingangs genannten Art zu schaffen, mit der sich insbesondere Montageabläufe vorteilhaft gestalten lassen.

Hauptmerkmale der erfindungsgemäßen Schelle sind im kennzeichnenden Teil von Anspruch 1 angegeben. Ausgestaltungen sind Gegenstand der Ansprüche 2 bis 8.

Bei einer Schelle der eingangs genannten Art, welche einen RFID-Chip aufweist, der mit einem Schaltkreis verbunden ist, wobei der Schaltzustand des Schaltkreises mit dem geschlossenen und geöffneten Zustand der Schelle korreliert, wird die Aufgabe erfindungsgemäß dadurch gelöst, dass sich die auslesbaren Datensätze des RFID-Chips in Abhängigkeit des Schaltzustands unterscheiden, wobei der RFID-Chip in Abhängigkeit des Öffnungszustands geänderte Daten ausgibt und dadurch der Schließzustand der Schelle überwachbar ist.

Die erfindungsgemäße Schelle hat den Vorteil, dass alle für den Montageablauf erforderlichen Daten auf dem RFID-Chip hinterlegt und bereits vor der Montage abgerufen werden können. Dadurch kann der Schellentyp auch ohne weitere Informationen unmittelbar bestimmt werden und es besteht keine Gefahr, dass die Daten von anderen Schellen zum Einsatz kommen.

Dadurch, dass erfindungsgemäß der RFID-Chip in Abhängigkeit des Öffnungszustands geänderte Daten ausgibt, lässt sich der Schließzustand der Schelle überwachen. Dabei muss es sich nicht um eine Endspannkraft handeln, sondern es kann beispielsweise der Moment des Schließens erfassbar sein, aus dem bei der Montage je nach Konfiguration verschiedene Schlüsse gezogen werden können.

Beispielsweise kann das Schließen bei automatisierten Montageabläufen und damit der Beginn der Kommunikation mit dem RFID-Chip beispielsweise dazu genutzt werden, einen Startpunkt für einen vorgegebenen Montageablauf zu setzen. Sobald ein Kontakt mit dem RFID-Chip aufgebaut ist, weiß z.B. ein Montageroboter, dass sich die Schelle nun in einer definierten geschlossenen, aber noch nicht verklemmten Stellung befindet, so dass anschließend ein zuvor festgelegter Spannvorgang des Spannelements ausgeführt werden kann, der in eine gewünschte Klemmstellung der Schelle in der Montagestellung führt. Dies kann beispielsweise das drehmoment- und/oder drehweggesteuerte Anziehen einer Spannschraube sein.

Wie aus den vorstehenden Ausführungen zu erkennen ist, bedeutet die Änderung im Schaltkreis nicht, dass die Schelle sich in einer finalen, montierten Stellung befindet, sondern lediglich am Anfang des Schließvorganges steht. Dies kann beispielsweise auch zunächst unabhängig von einem Montagevorgang dazu genutzt werden, technischen Daten einer Schelle zu Informationszwecken auszulesen.

Gemäß einer optionalen Ausgestaltung ist vorgesehen, dass an dem Schellenband ein Spannelement zum Festklemmen der Schelle in der Montagestellung angeordnet ist. Bei solchen Schellen ist der Schaltzustand nicht nur zu Überwachungszwecken geeignet, sondern kann in vorteilhafter Weise auch zur Festlegung von Parametern beim Spannen des Spannelements eingesetzt werden.

In einer Ausführungsform ist das Schellenband zum Festklemmen der Schelle in der Montagestellung federnd ausgebildet, und weist insbesondere keine zusätzlichen Spannelemente auf. Hier kann sich zu Nutze gemacht werden, dass eine korrekt montierte Federschelle eine definierte Form einnimmt, sodass dieser Wunschmontagezustand mit dem Schaltkreis detektieren lässt.

Es besteht die Option, dass der Schaltkreis einen Schalter oder Drucksensor aufweist, mit dem der Schaltkreises nur bei geschlossenen Zustand der Schelle geschlossen wird. Ein Schalter kann ggf. einfacher montiert werden, als Kontakte, die auch auf einer gegenüberstehenden Fläche ein Gegenstück erfordern. In Kombination mit einem Drucksensor kann der auslesbare Datensatz mehrstufige Datenänderungen aufweisen. Das ermöglicht beispielsweise nicht nur einen Erstkontakt beim Schließen zu detektieren, sondern auch den Anpressdruck zwischen zwei Flächen zu überwachen, um das Spannen der Schelle prozesssicher durchzuführen.

Es besteht bei der Ausgestaltung die Option, dass der RFID-Chip auf einer Innenseite des Schellenbandes angeordnet, insbesondere festgelegt ist, oder auf einer Außenseite des Schellenbandes angeordnet, insbesondere festgelegt ist. Auf der Innenseite kann der RFID-Chip vom Schellenband geschützt sein. Auf der Außenseite wird eine bessere Datenverbindung ermöglicht.

Gemäß einer speziellen Ausführungsform weist das Schellenband wenigstens zwei sich gegenüberstehende Spannköpfe zum Festklemmen der Schelle in der Montagestellung auf, wobei der RFID-Chip an einem dieser Spannköpfe angeordnet ist.

Vorzugsweise ist der RFID-Chip passiv ausgeführt, d.h. die für die Kommunikation erforderlich elektrische Energie wird durch ein elektromagnetisches Signal eines RFID-Empfängers in dem Chip generiert. Aktive Ausführungsformen mit eigener Stromversorgung sind möglich, aber in aller Regel nicht erforderlich. Es kann sogar nachteilig sein, auf eine in der Schelle vorgesehene Stromversorgung zu vertrauen, die nach längerer Lagerung oder auch nach einem Einbau nur für eine begrenzte Zeit zur Verfügung steht. Auch kann das Senden des RFID-Chips über eine größere Reichweite in einem Umfeld störend sein, in dem sich weitere Schellen befinden, z.B. in einem Motorraum eines Kraftfahrzeuges. Dieser Nachteil entfällt, wenn die Daten bei geschlossener Schelle mit passivem RFID-Chip erst durch einen in unmittelbarer Nähe angeordneten RFID-Empfänger abgefragt werden.

Die RFID-Empfänger können in üblicher Art und Weise beschaffen sein, wobei sie mit automatisiertem Montagewerkzeug gekoppelt sein können, um die Kommunikation zwischen diesem und der Schelle herzustellen.

Während bei einfachen Schlauchschellen das Schellenband auf der Innenseite eine glatte Fläche aufweist, ist es je nach Anwendungsfall vorteilhaft, dass die Schelle als Profilschelle mit einem im Querschnitt V-förmigen Schellenband ausgebildet ist.

Eine solche Ausführungsform erlaubt es z.B., zwei auf Stoß angeordnete Rohrelemente fluiddicht zu verbinden, wobei es bei solchen Ausführungen besonders wichtig ist, die Spannkräfte exakt einzuhalten, um Fluidundichtigkeiten zu vermeiden.

Ein solche Ausführungsform bietet auch den Vorteil, dass der RFID-Chip mittig in der Vertiefung des V-förmigen Schellenbandes angeordnet ist.

In einer besonders zweckmäßigen Ausführungsform der Erfindung ist vorgesehen, dass der RFID-Chip mittels eines selbstklebenden, isolierenden Klebebandes an der Schelle insbesondere dem Schellenband befestigt ist.

Ein solche Befestigung ist einfach und zweckdienlich und insbesondere bei Befestigung auf der Innenseite des Schellenbandes nach der Montage auch dauerhaft verliersicher.

Insbesondere bei den bereits erwähnten V-Profilschellen ist es vorteilhaft oder sogar notwendig, dass das Schellenband in zwei biegesteife Schellenhälften unterteilt ist, die auf der der Öffnung gegenüberliegenden Seite über ein Gelenk miteinander verbunden sind. Mittels einer solchen Schelle lassen sich Schlauch- und Rohrelemente besonders positionssicher befestigen und in entsprechenden Anwendungsfällen auch fluiddicht miteinander verbinden, da die erforderlichen Klemmkräfte auch in axialer Richtung aufgebaut werden können.

In einer besonders bevorzugten Ausführungsform der Erfindung ist vorgesehen, dass in dem RFID-Chip eine individuelle Seriennummer, technische Daten der Schelle und/oder technische Daten bezüglich des Montagevorgangs der Schelle abgespeichert sind, die in Abhängigkeit des Schaltzustands des Schaltkreises auslesbar sind. Hierdurch können alle relevanten Daten der Schelle alle erforderlichen Daten der Schelle, die ggf. für den jeweiligen Montagefall spezifiziert sein können, jederzeit ausgelesen und bei einem automatisierten Montagevorgang zur Steuerung der Prozessparameter eingesetzt werden.

Zur Vermeidung störender Interferenzen der Signale mit einem metallischen Schellenband, kann es von Vorteil sind, dass der RFID-Chip und/oder eine Antenne des RFID-Chips mittels eines nicht-metallischen Abstandshalters an dem Schellenband befestigt ist.

In einer noch weiteren bevorzugten Ausführungsform der Erfindung ist vorgesehen, dass der RFID-Chip einen Speicher besitzt, in dem während der Montage erfasste Daten speicherbar sind.

Hierdurch ergibt sich die Möglichkeit, z.B. den Montageverlauf und/oder ein finales Anzugsdrehmoment für eine spätere Qualitätskontrolle zu dokumentieren, ohne dass ein Rückgriff auf die Datenbank der Montageanlage erforderlich wäre.

Der RFID-Empfänger kann z.B. in dem Montagewerkzeug selbst angeordnet sein und die entsprechenden Daten zur Steuerung an dessen Steuergerät weitergeben.

Eine weitere Option besteht auch darin, die Istwerte eines Montagevorganges zu protokollieren und z.B. die Fehlerfreiheit zu bestätigen. Im umgekehrten Fall kann auch eine Warnung ausgegeben werden, wenn erkannt wird, dass ein vorschriftsgemäßes Montieren nicht möglich ist, weil ein Defekt der Schelle vorliegt oder diese nicht korrekt in ihrer Montageposition ausgerichtet worden ist. Derartige Optionen gewinnen im Rahmen der Qualitätssicherung von Montagevorgängen zunehmend an Bedeutung.

Schließlich kann zur Erleichterung einer späteren Qualitätskontrolle vorzugsweise vorgesehen sein, dass während des Montagevorgangs Daten bezüglich Kenngrößen der Verbindung erfasst und in dem RFID-Chip für eine spätere Qualitätskontrolle gespeichert werden. Eine derartige Kenngröße kann z.B. das finale Anzugsmoment der Spannschraube sein.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine perspektivische Ansicht einer nicht erfindungsgemäßen Schelle;
- Fig. 2: ein Anzugsdiagramm einer Schelle mit Spannschraube in zeitlicher Abhängigkeit von der Kontaktierung eines RFID-Chips.

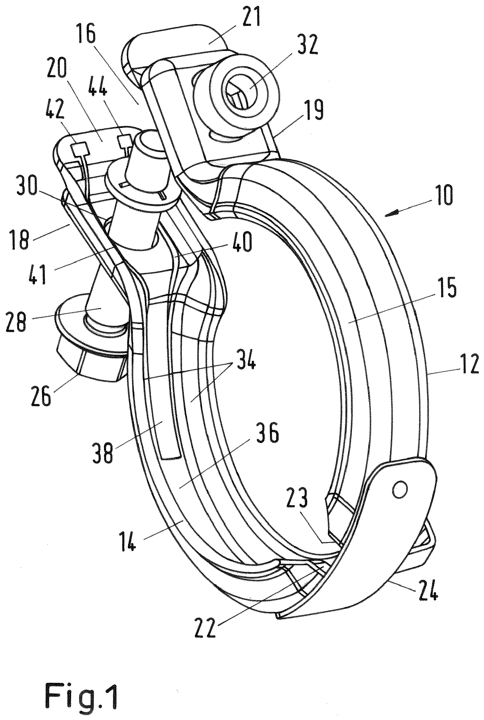

In Fig. 1 ist eine perspektivische Ansicht einer Schelle10 gezeigt, die sich einem geöffneten Zustand vor der Montage befindet. Die Schelle 10 weist ein in zwei Schellenhälften 14, 15 geteiltes Schellenband 12 auf, wobei an einer Öffnung 16 der Schelle 10 die Enden 18, 19 der beiden Schellenhälften 14, 15 zu Spannköpfen 20, 21 (auch als Öffnungsflansche bezeichenbar) umgebogen sind, so dass die beiden Enden 18, 19 bei geschlossener Schelle 10 aneinander anliegen.

An ihren den Spannköpfen gegenüberliegenden Enden 22 sind die beiden Schellenhälften 14, 15 über ein Gelenk 24 gelenkig miteinander verbunden, so dass die Öffnung 16 der Schelle 10 durch gegenläufiges Verschwenken der Schellenhälften 14, 15 aufgeweitet werden kann, um die Schelle 10 auf Rohrelemente (nicht gezeigt) aufgesetzt werden kann.

Die beiden Spannköpfe 20, 21 sind mittels einer hier als Spannelement 26 eingesetzten Spannschraube 28 gegeneinander verklemmbar, wobei in dem einen Spannkopf 20 eine Durchgangsbohrung 30 vorgesehen ist, durch die der Schaft der Spannschraube 28 ragt, und in dem gegenüberliegenden Spannkopf 21 ein Durchgangsgewinde 32 vorgesehen ist, in welches der Gewindeschaft der Spannschraube 28 eindrehbar ist.

Die beiden Schellenhälften 14, 15 sind mit einem V-förmigen Profilquerschnitt ausgeführt. Dessen innere Schrägflächen 34 sind dazu geeignet, mit korrespondierenden Schrägflächen an Ringflanschen zusammenzuwirken, die an dem Außenumfang von zwei auf Stoß angeordneten Rohrenden (nicht gezeigt) angeordnet sind. Beim Verklemmen der beiden Schellenhälften 14, 15 gegen diese Ringflansche durch Anziehen der Spannschraube 28 werden die Rohrenden dann nicht nur positioniert, sondern auch axial gegeneinander fluiddicht verklemmt. Die Schellenhälften 14, 15 sind aufgrund der V-Profilform sehr steif ausgeführt. Für einfache Anwendungen können aber auch andere Querschnittsformen der Schellenhälften zum Einsatz kommen oder auch einfache Schellenbänder aus flexiblen Bändern, die aufgrund ihrer Eigenbeweglichkeit auch keine Unterteilung in zwei Hälften mittels eines Gelenks benötigen.

In der in der Darstellung gemäß Fig. 1 unten angeordneten Schellenhälfte 14 ist in der mittleren Vertiefung 36 des V-Profils ein RFID-Chip 38 angeordnet, der mittels eines Klebebandes an der Schellenhälfte 14 gehalten ist. Zwei Zuleitungen 40, 41 bilden Teile eines Kontaktkreises und enden im Bereich des Spannkopfes 20 mit als Kontaktflächen ausgebildeten nicht erfindungsgemäßen Kontakten 42, 44. Die Zuleitungen 40, 41 und die Kontaktflächen 42, 44 sind gegenüber der aus Metall bestehenden unteren Schellenhälfte 14 isoliert und können durch diese nicht kontaktiert werden. In Richtung des oberen Spannkopfes 19 befinden sich die eigentlichen, nicht isolierten Kontaktflächen 42, 44, so dass beim Schließen der Schelle 10 der Kontaktkreis durch die aus Metall bestehende obere Schellenhälfte 15 geschlossen wird. Bei dem gezeigten Ausführungsbeispiel werden die Kontakte dann geschlossen, wenn die beiden Spannköpfe 20, 21 berühren, ohne dass hierzu ein Anziehen der Spannschraube 28 erforderlich ist. Der Kontaktkreis kann daher zu Testzwecken manuell geschlossen werden, wenn man die beiden Schellenhälften 14, 15 zusammendrückt, bis sich die Spannköpfe 20, 21 aneinander anlegen.

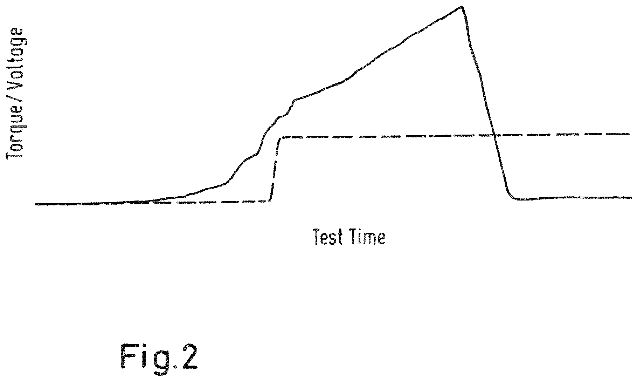

Bei der endgültigen Montage wird die Schelle 10 zunächst auf ein Rohrelement oder zwei zu verbindende Rohrelemente aufgesetzt. Nachfolgend kann ein Montagewerkzeug (nicht gezeigt), das mit einem RFID-Empfänger (ebenfalls nicht gezeigt) verbunden ist, an der Spannschraube 28 angesetzt werden. Das Montagewerkzeug ist im vorliegenden Fall mit einer optionalen Drehmomenterfassung ausgestattet, die den Drehmomentverlauf während des Anziehens erfasst. Ein hierbei typischer Verlauf ist in Fig. 2 wiedergegeben, der den Verlauf des Anzugsmomentes über einer Zeitachse darstellt. Das anfängliche Anziehen erfolgt nahezu lastfrei (siehe Fig. 1) mit einem leichten Anstieg, der ab einer Berührung der Spannköpfe nahezu kontinuierlich ansteigt. Der untere Graph verdeutlicht den Schaltzustand des den RFID-Chip 38 aktivierenden Kontaktkreises. Der Zeitpunkt, zu welchem die elektrischen Kontaktflächen 42, 44 durch den Spannkopf 20 kontaktiert werden, ist durch den sprunghaften Anstieg auf ein bestimmtes Niveau gekennzeichnet.

Der Anstieg des Kontaktsignals gibt dem Montagewerkzeug über den ab diesem Zeitpunkt aktiven RFID-Chip 38 den Hinweis auf eine bestimmte Stellung der Schelle 10, zu welcher die Spannköpfe 20, 21 sich gerade berühren. Die Informationen aus dem RFID-Chip können nun abgefragt und für den weiteren Anzugsvorgang berücksichtigt werden. Eine solche Information kann beispielsweise aus einem anzustrebenden finalen Anzugsmoment und/oder einem ab diesem Zeitpunkt oder ab einem bestimmten Anzugsmoment noch auszuführenden Anzugsdrehwinkel bestehen.

Der Abschluss des Anzugsvorganges, d.h. der Abschluss der Montage ist in Fig. 2 durch ein endgültig erreichtes Drehmomentniveau gekennzeichnet, nach dessen Erreichen das Werkzeug ausgeschaltet wird, so dass das gemessenen Drehmoment dann auf Null abfällt. Da der Kontaktkreis geschlossen bleibt, verbleibt das Signal des RFID-Chips aktiv im Einschaltzustand "1".

Die in Fig. 2 veranschaulichte Drehmomenterfassung kann zusammen mit einer Seriennummer der Schelle protokolliert werden und zu Zwecken der Qualitätssicherung dokumentiert werden. Sofern sich ein nicht idealer Verlauf einstellt, beispielsweise ein abrupter vorzeitiger Abfall des Drehmomentes oder ein zum Zeitverlauf (oder bei geeigneter Erfassung Verlauf des Drehwinkels des Werkezuges) nicht passender Drehmomentverlauf ergeben, kann der Montagevorgang unter Ausgabe eines Warnhinweises abgebrochen werden.

Wie bereits weiter oben erwähnt, ist es auch möglich, bei einfachen Werkzeugen ohne Drehmomentüberwachung nach dem Aktivieren des RFID-Chips z.B. nur noch einen bestimmten Drehwinkel durch das Montagewerkzeug auszuführen, unter welchem für den betreffenden Schellentyp eine korrekte Montage angenommen werden kann. Eine weitergehende Überprüfung ist bei einer solchen Vorgehensweise natürlich nicht möglich.

Auch bei einem manuellen Anziehen kann der RFID-Chip dem Monteur erforderliche Informationen zur Verfügung stellen, damit diesen den Montagevorgang manuell nach bestimmten Vorgaben durchführen kann.

Die Erfindung ist nicht auf eine der vorbeschriebenen Ausführungsformen beschränkt, sondern in vielfältiger Weise abwandelbar. So ist die Erfindung insbesondere nicht auf Profilschellen beschränkt, sondern auch auf andere Schellenarten übertragbar.

### Bezugszeichenliste

- 10: Schelle
- 12: Schellenband
- 14, 15: Schellenhälften
- 16: Öffnung
- 18, 19: Enden der Schellenhälften
- 20, 21: Spannköpfe
- 22, 23: gelenkseitige Enden der Schellenhälften
- 24: Gelenk
- 26: Spannelement
- 28: Spannschraube
- 30: Durchgangsbohrung
- 32: Durchgangsgewinde
- 34: Schrägflächen des V-Profils
- 36: Vertiefung des V-Profils
- 38: RFID-Chip
- 40, 41: Zuleitungen Kontaktkreis
- 42, 44: Kontaktflächen

## Patentansprüche

1. Schelle zum Befestigen von Schlauch- oder Rohrelementen, wobei die Schelle ein ringförmiges Schellenband (12) mit wenigstens einer Öffnung (16) aufweist, wobei die Schelle (10) einen geschlossenen Zustand und einen geöffneten Zustand aufweist sowie in einer Montagestellung festklemmbar ist, wobei die Schelle (10) einen RFID-Chip (38) aufweist, wobei der RFID-Chip (38) mit einem Schaltkreis verbunden ist, wobei ein Schaltzustand des Schaltkreises mit dem geschlossenen und geöffneten Zustand der Schelle (10) korreliert, **dadurch gekennzeichnet, dass** sich die auslesbaren Datensätze des RFID-Chips (38) in Abhängigkeit des Schaltzustands unterscheiden, wobei der RFID-Chip (38) in Abhängigkeit des Öffnungszustands geänderte Daten ausgibt und dadurch der Schließzustand der Schelle (10) überwachbar ist.

2. Schelle nach Anspruch 1, **dadurch gekennzeichnet, dass** an dem Schellenband (12) ein Spannelement (26) zum Festklemmen der Schelle (10) in der Montagestellung angeordnet ist.

3. Schelle nach Anspruch 1, **dadurch gekennzeichnet, dass** das Schellenband (12) zum Festklemmen der Schelle (10) in der Montagestellung federnd ausgebildet ist, und insbesondere keine zusätzlichen Spannelemente aufweist.

4. Schelle nach einem Ansprüche 1 bis 3, **dadurch gekennzeichnet, dass** der Schaltkreis einen Schalter oder Drucksensor aufweist, mit dem der Schaltkreises nur bei geschlossenen Zustand der Schelle (10) geschlossen wird.

5. Schelle nach einem der vorhergehenden Ansprüche, **dadurch gekennzeichnet, dass** der RFID-Chip (38) auf einer Innenseite des Schellenbandes (12) oder auf einer Außenseite des Schellenbandes (12) angeordnet ist.

6. Schelle nach einem der vorhergehenden Ansprüche, **dadurch gekennzeichnet, dass** das Schellenband (12) wenigstens zwei sich gegenüberstehende Spannköpfe (20, 21) zum Festklemmen der Schelle (10) in der Montagestellung aufweist, wobei der RFID-Chip (38) an einem dieser Spannköpfe (20, 21) angeordnet ist.

7. Schelle nach einem der vorhergehenden Ansprüche, **dadurch gekennzeichnet, dass** im geöffneten Zustand des Schaltkreises nur ein Datensatz mit reduzierten Informationen abfragbar ist.

8. Schelle nach einem der vorhergehenden Ansprüche, **dadurch gekennzeichnet, dass** der RFID-Chip (38) einen Speicher besitzt, in dem während der Montage erfasste Daten speicherbar sind.

## Claims

1. Clamp for fastening hose or pipe elements, wherein the clamp has an annular clamp band (12) with at least one opening (16), wherein the clamp (10) has a closed state and an open state and can also be clamped firmly in an installation position, wherein the clamp (10) has an RFID chip (38), wherein the RFID chip (38) is connected to a circuit, wherein a switching state of the circuit correlates with the closed state and open state of the clamp (10), **characterized in that** the readable data sets of the RFID chip (38) differ in dependence on the switching state, wherein the RFID chip (38) outputs data altered in dependence on the opening state, and it is thus possible to monitor the closing state of the clamp (10) .

2. Clamp according to Claim 1, **characterized in that** the clamp band (12) has arranged on it a tensioning element (26) for clamping the clamp (10) firmly in the installation position.

3. Clamp according to Claim 1, **characterized in that** the clamp band (12), for the purpose of clamping the clamp (10) firmly in the installation position, is of resilient design, and has in particular no additional tensioning elements.

4. Clamp according to one of Claims 1 to 3, **characterized in that** the circuit has a switch or pressure sensor, by means of which the circuit is closed only when the clamp (10) is in the closed state.

5. Clamp according to one of the preceding claims, **characterized in that** the RFID chip (38) is arranged on an inner side of the clamp band (12) or on an outer side of the clamp band (12).

6. Clamp according to one of the preceding claims, **characterized in that** the clamp band (12) has at least two mutually opposite tensioning heads (20, 21) for clamping the clamp (10) firmly in the installation position, wherein the RFID chip (38) is arranged on one of these tensioning heads (20, 21).

7. Clamp according to one of the preceding claims, **characterized in that**, in the open state of the circuit, only a data set with reduced information can be interrogated.

8. Clamp according to one of the preceding claims, **characterized in that** the RFID chip (38) has a memory in which data detected during installation can be stored.

## Revendications

1. Collier de serrage pour la fixation d'éléments de tuyau ou de tube, le collier de serrage présentant une bande de collier de serrage annulaire (12) avec au moins une ouverture (16), le collier de serrage (10) présentant un état fermé et un état ouvert et pouvant être serré dans une position de montage,
le collier de serrage (10) présentant une puce RFID (38), la puce RFID (38) étant reliée à un circuit de commutation, un état de commutation du circuit de commutation étant en corrélation avec l'état fermé et ouvert du collier de serrage (10), **caractérisé en ce que** les ensembles de données lisibles de la puce RFID (38) diffèrent en fonction de l'état de commutation, la puce RFID (38) émettant des données modifiées en fonction de l'état d'ouverture, et l'état de fermeture du collier de serrage (10) pouvant ainsi être surveillé.

2. Collier de serrage selon la revendication 1, **caractérisé en ce qu'**un élément de serrage (26) est agencé sur la bande de collier de serrage (12) pour serrer le collier de serrage (10) dans la position de montage.

3. Collier de serrage selon la revendication 1, **caractérisé en ce que** la bande de collier de serrage (12) est réalisée sous forme élastique pour le serrage du collier de serrage (10) dans la position de montage, et notamment ne présente pas d'éléments de serrage supplémentaires.

4. Collier de serrage selon l'une quelconque des revendications 1 à 3, **caractérisé en ce que** le circuit de commutation présente un commutateur ou un capteur de pression avec lequel le circuit de commutation est fermé uniquement à l'état fermé du collier de serrage (10).

5. Collier de serrage selon l'une quelconque des revendications précédentes, **caractérisé en ce que** la puce RFID (38) est agencée sur un côté intérieur de la bande de collier de serrage (12) ou sur un côté extérieur de la bande de collier de serrage (12).

6. Collier de serrage selon l'une quelconque des revendications précédentes, **caractérisé en ce que** la bande de collier de serrage (12) présente au moins deux têtes de serrage (20, 21) opposées pour serrer le collier de serrage (10) dans la position de montage, la puce RFID (38) étant agencée sur l'une de ces têtes de serrage (20, 21) .

7. Collier de serrage selon l'une quelconque des revendications précédentes, **caractérisé en ce qu'**à l'état ouvert du circuit de commutation, seul un ensemble de données contenant des informations réduites peut être interrogé.

8. Collier de serrage selon l'une quelconque des revendications précédentes, **caractérisé en ce que** la puce RFID (38) possède une mémoire dans laquelle des données acquises pendant le montage peuvent être stockées.
